# EUROPEAN PATENT APPLICATION

(11) **EP 0 634 598 A1**
(43) Date of publication of application: **18.01.1995**
(21) Application number: 94108739.7
(22) Date of filing: 08.06.1994
(51) Int. Cl.: F16L 23/14, F16L 47/00, F24F 13/02

(54) **Quick-coupling joint, for ducts of air-conditioning units**

(30) Priority: 12.07.1993 IT MI931516
(71) Applicant: COVENCO S.R.L., I-20019 Settimo Milanese (Milano) (IT)
(72) Inventor: Colnaghi, Evi, I-20080 Cisliano (Milano) (IT); Bagattin, Ugo, I-20017 Mazzo di Rho (Milano) (IT)
(74) Representative: Forattini, Amelia

(57) **Abstract**

A quick-coupling joint for ducts of air-conditioning units, includes a box profiled member (1) made of plastic and having a rubber gasket (26). The profiled member (1) has a much higher thermal insulation than conventional profiled members and the gasket (26) ensures very good airtightness.

## Description

The present invention relates to a quick-coupling joint for ducts of air-conditioning units.

Metal ducts of air-conditioning units were usually joined by welding or by means of flanges formed by bending the edges of the segments and locked by U-bolts, staples, bolts and the like.

These joining systems had various drawbacks, including in particular an onerous and complicated execution on site, and while welding could produce damaging corrosion, the other methods hardly ensured good airtightness.

This same Applicant long ago developed a joining system constituted by L-shaped box profiled members that can be applied to the edges of the duct segment, which usually has a rectangular or square cross-section, in mutually perpendicular positions. An L-shaped member is coupled to each pair of mutually perpendicular profiled members to stiffen and lock the profiled members to the segment with the additional purpose of mutually locking the segments to be joined.

This system has proved itself highly advantageous from all points of view and has of course undergone improvements and modifications in the course of time.

Reference should be made for example to the Italian utility model No. 216771 and to the Italian utility model application No. MI910 00029 in the name of this same Applicant, which describe locking devices of the above mentioned type according to the most recent developments.

The aim of the present invention is to provide an improved joining device that ensures a significantly higher degree of insulation than known systems.

Within the scope of this aim, an object of the invention is to provide a lighter device.

Another important object is to provide a device that better complies with the recent statutory provisions concerning the specific issue.

This aim, these objects and others which will become apparent hereinafter are achieved by a joining device as claimed in the accompanying claims.

Further characteristics and advantages will become apparent from the description of a preferred but not exclusive embodiment of the invention, illustrated only by way of non-limitative example in the accompanying drawings, wherein:

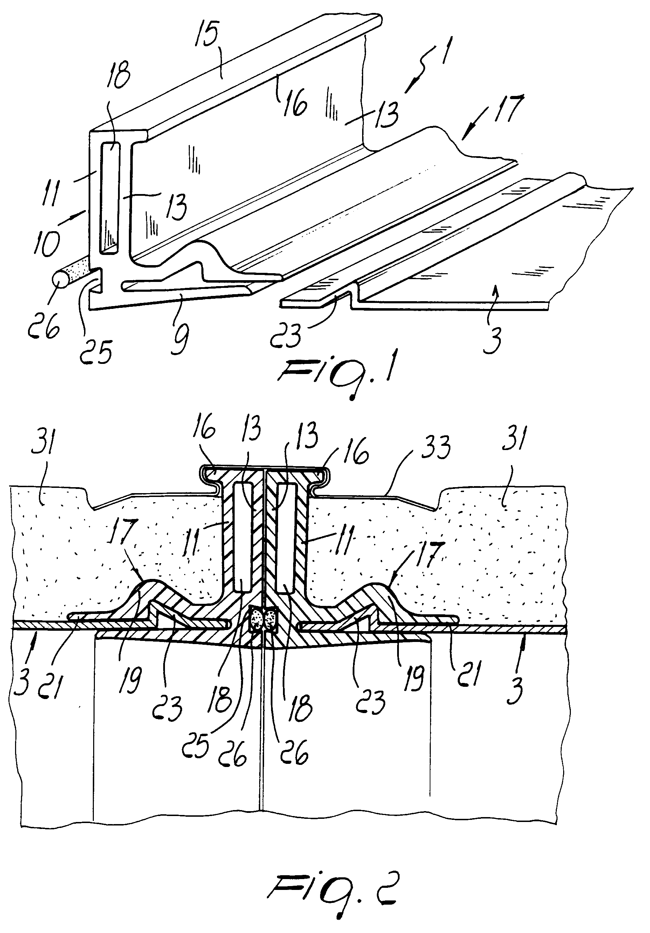

Figure 1 is a perspective view of the device according to the invention, illustrating a portion of a box profiled member next to a portion of a segment edge;
Figure 2 is a transverse sectional view of the joining device in assembled condition;
Figure 3 is an exploded perspective view of two duct segments to be joined;
Figure 4 is a front view of the L-shaped member;
Figure 5 is a front view of a segment provided with the joining device;
Figure 6 is a side view of two duct segments joined according to the invention.

With reference to the above figures, the joining device according to the invention includes a box profiled member, generally designated by the reference numeral 1, that can be fitted to the edge of a wall 3 of a duct segment.

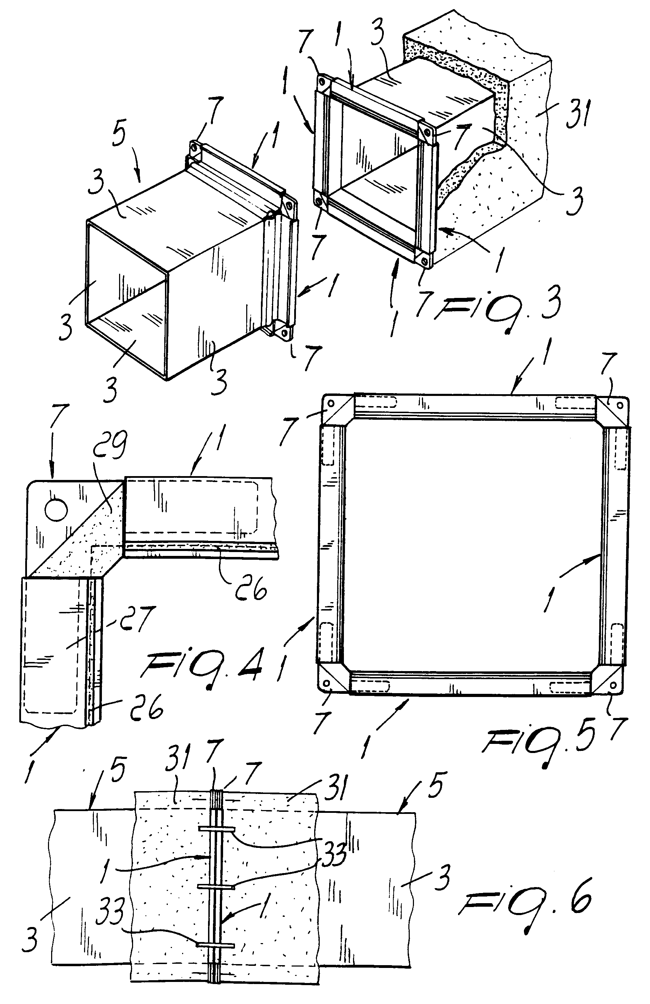

As shown schematically in Figure 3, the ducts 5 of air-conditioning units are generally constituted by four mutually perpendicular metal walls 3. A box profiled member 1 is fitted to each wall, and a metal L-shaped member 7 is applied between each pair of mutually perpendicular profiled members.

The segments are then joined, as shown in Figure 6, and locked by means of bolts applied to the L-shaped members.

The box profiled member 1 is made of extruded plastics, preferably PVC, for example of the type known as "Tecnopro CMP" manufactured by Montecatini, and includes a first portion 9 which is located inside the duct when the structure is assembled and is connected to a second portion 10 which lies at right angles to the first one.

The second portion 10 includes a third portion 11, which faces the similar portion of the profiled member of the segment to be joined, and a fourth portion 13, which is parallel to the third portion 11.

The third and fourth portions are closed in an upper region by a fifth portion 15 which includes an edge 16 that protrudes from the portion 13.

The third, fourth and fifth portions form an internal chamber 18. A sixth portion 17 is connected to the fourth portion 13 and is substantially parallel to the first portion 9.

The sixth portion includes a curved region 19 which is suitable to engage an engagement means formed proximate to the edge of the segment 3. This engagement means is preferably and advantageously constituted by a continuous ridge 23 formed on the wall of the segment 3.

The sixth portion 17 also includes an end portion 21 that extends beyond the end of the first portion 9 so that it is optionally possible to apply rivets or other engagement means to further lock the profiled member on the segment.

A guide 25 is formed along the third portion 11 of the profiled member 1 and is suitable to accommodate a cylindrical gasket 26 which is advantageously made of neoprene. As shown in Figure 2, in assembled position the gasket 26 is meant to couple to the similar gasket 6 of the facing profiled member in order to ensure tightness.

Advantageously, the guide 25 has a dovetail cross-section so as to retain the gasket, which can be inserted in the guide before cutting the profiled member to the desired size.

Figure 4 illustrates an L-shaped member 7 which is particularly suitable for mutually connecting the profiled members 1, according to the invention, and includes a metal L-shaped part 27 to which a sealing member 29, preferably made of rubber, is applied.

The use of the joint is evident: it is in fact sufficient to apply the L-shaped members 7 to the four profiled member 1 and to force the edge of the wall 3 of each segment inside the profiled member 1 to make the curved region 19 engage the ridge 23 in order to lock the profiled member to the wall 3.

At the ends of the profiled members, the edge of each wall 3 abuts against the sealing element 29 of the L-shaped member 7, ensuring tightness in a usually critical point of the joint.

As shown in Figures 2 and 6, clip members 33 that can be applied to the protruding edges 16 of the profiled members 1 are advantageously provided in order to apply insulating material 31 on the outside of the ducts.

In practice it has been observed that the invention achieves the intended aim and objects, providing a quick-coupling joint system that has, with respect to conventional systems, the great advantage of optimum thermal insulation also by virtue of the plastics used for the profiled members.

Furthermore, the arrangement of the gasket, which is advantageously inserted in the guide before cutting the profiled member, allows perfect airtightness combined with very simple installation.

The joint according to the invention is susceptible to numerous modifications and variations, all of which are within the scope of the inventive concept; all the details may furthermore be replaced with technically equivalent elements.

Naturally, the materials employed, as well as the dimensions, may be any according to the requirements and the state of the art.

Where technical features mentioned in any claim are followed by reference signs, those reference signs have been included for the sole purpose of increasing the intelligibility of the claims and accordingly, such reference signs do not have any limiting effect on the scope of each element identified by way of example by such reference signs.

## Claims

1. Quick-coupling joint for ducts of air-conditioning units comprising at least one first duct segment (5) to be joined to a second segment (5), said first segment comprising at least a first wall (3) and a second wall (3), said first wall being associable with a first box profiled member (1), said second wall being associable with a second box profiled member (1) which is substantially identical to said first profiled member (1), said first and second box profiled members being mutually associable by an L-shaped locking means (7), said first and second box profiled members facing corresponding box profiled members of said second duct segment (5), said joint being characterized in that said box profiled members are made of plastics, each one of said box profiled members comprising a first portion (9) which, when the structure is assembled, is located inside said duct and is connected to a second portion (10) that is at right angles to said first portion; said second portion comprising in turn a third portion (11) which faces a similar profiled member portion of the segment to be joined, and a fourth portion (13) which is parallel to said third portion; said third and fourth portions being closed at the top by a fifth portion (15) that comprises an edge (16) that protrudes from said fourth portion; said third, fourth and fifth portions forming an internal chamber; a sixth portion (17) being connected to said fourth portion and being substantially parallel to said first portion; said sixth portion comprising a curved region (19) that is suitable to engage an engagement means (23) formed proximate to the edge of the segment.

2. Joint according to claim 1, characterized in that said plastics is constituted by PVC.

3. Joint according to claim 1 or 2, characterized in that it comprises a guide (25) which is formed along said second portion of said profiled member and is suitable to accommodate a cylindrical gasket (26), in assembled position said gasket being adapted to couple with a similar gasket of the facing profiled member to ensure tightness.

4. Joint according to one or more of the preceding claims, characterized in that said guide (25) has a dovetail cross-section.

5. Joint according to one or more of the preceding claims, characterized in that said sixth portion (17) furthermore comprises an end portion (21) extending beyond the end of said first portion so that it is optionally possible to apply engagement means to further lock the profiled member on the segment.

6. Joint according to one or more of the preceding claims, characterized in that it comprises clip members (33) that can be applied to said protruding edges of the profiled members to fasten insulating material (31) on the outside of the ducts.

7. Joint according to one or more of the preceding claims, characterized in that it comprises an L-shaped member (27) comprising two portions at rights angles connected to a central portion, said central portion having a sealing member (29) adapted to engage at least one portion of said walls.
